# EUROPEAN PATENT APPLICATION

(11) **EP 1 052 882 A2**
(43) Date of publication of application: **15.11.2000**
(21) Application number: 00304010.2
(22) Date of filing: 12.05.2000
(51) Int. Cl.: H05K 5/03

(54) **Hood**

(30) Priority: 14.05.1999 GB 9911351
(71) Applicant: Cooper Crouse-Hinds (UK) Limited, Sheerness, Kent ME12 1LP (GB)
(72) Inventor: Heyse, Peter, Maidstone ME 15 9AQ Kent (GB); Jiggens, Alan, West Malling ME 5AD kent (GB)
(74) Representative: Mounteney, Simon James

(57) **Abstract**

A hood 22 for an enclosure, the said hood comprising a roof portion 23 for location over the enclosure and a fixing portion 28, 32 provided with fixing means; the said fixing means being located in such a position that, when the said hood and enclosure are assembled together for use, the said fixing means substantially correspond with the location of means 12 provided on the enclosure, for supporting the position of the enclosure for use.

## Description

The present invention relates to a hood for an enclosure for a meter, instrument, system control or the like.

Such enclosures are well known and widely used. Generally, they consist of a box-like body, adapted to be mourned to a wall or other up-standing surface and have a hinged or screw-fixed front surface, which acts as a door. To provide suitable protection against local atmospheric conditions, the door is normally provided with a seal. Where used outside, the enclosure must be capable of providing weather-proof protection for the equipment that it contains. Therefore, for exterior siting, a hood can be provided in order to protect the seal against rain, permanent damp and UV radiation.

Typically, the hood is fitted to the top of the enclosure by drilling holes through the upper surface of the enclosure and bolting the hood to it using brackets. Whilst such a hood provides significant benefits, the fitting process is inconvenient and destroys the integrity of the original enclosure casing - which may be rated as waterproof. Furthermore, if the hood is retrofitted to an enclosure, there may be safety risks associated with the equipment contained within the enclosure.

The present invention sets out to provide a hood for an enclosure that overcomes these problems. Accordingly, a first aspect of the invention provides a hood for an enclosure, the said hood comprising a roof portion for location over the enclosure and a fixing portion provided with fixing means; the said fixing means being located in such a position that, when the said hood and enclosure are assembled together for use, the said fixing means substantially correspond with the location of means which are provided on the enclosure for supporting the position of the enclosure for use.

By such an arrangement, it is not necessary to drill holes in the roof of the enclosure, because the fixing means provided for mounting the enclosure can also be used for securing the hood to the enclosure. Thus the integrity of the enclosure is preserved and the hood can be fitted to the enclosure with relative ease and safety.

Preferred features of this aspect of the invention are set out in Claims 2 to 15.

The invention also relates to a hood in combination with an enclosure.

An embodiment of the invention will now be described, by way of example, and with reference to the accompanying drawings in which:-
Figure 1 is a front perspective view of an enclosure;
Figure 2 is a rear perspective view of the enclosure of Figure 1, shown in conjunction with a mounting bracket and fitted with a hood in accordance with the invention;
Figure 3 is a side view of the enclosure, rain hood and bracket of Figure 2, when assembled;
Figure 4 is a view of a blank which is subjected to a folding operation to form the rain hood of Figures 2 and 3;
Figure 5 is a view similar to Figure 3, but showing the enclosure assembled in conjunction with a different embodiment of the hood (in this case, the bracket is omitted);
Figure 6 shows a plan view of a blank which is used to form the rain hood of Figure 5; and
Figure 7 is a view similar to Figure 3, but showing a hood having a forwardly declivitous roof surface.

The enclosure shown in the figures is well known within the art. It is to be understood that the invention is not limited for use with this enclosure. The invention may be used with a large range of enclosures, having different configurations and manufactured from different materials, including plastics such as polycarbonate and ABS, GRP and metals including aluminium and steel.

The illustrated enclosure essentially takes the form of a steel box defined by a housing 4 provided with a hinged door 6. The door 6 seals an opening 8 provided in the front of the housing 4. Any equipment contained within the enclosure is accessed via the opening 8.

It is to be understood that the door 6 could just as easily be fitted to the housing by a series of screws or other fixings, rather than using hinges.

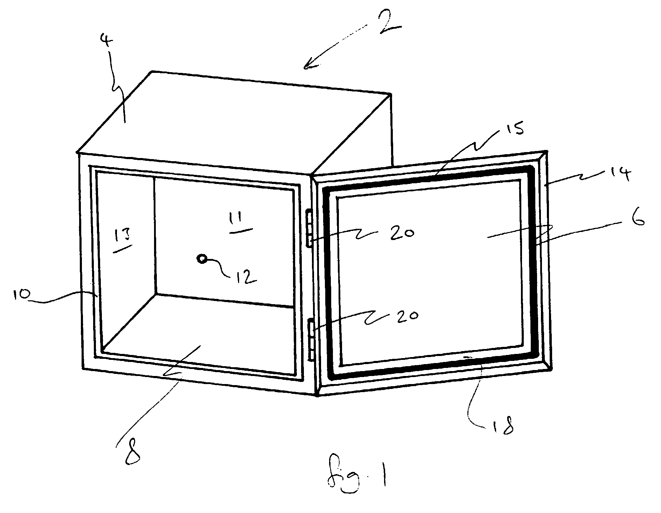

The opening 8 has a projecting lip 10 extending around its perimeter. The rear wall 11 of the enclosure 2 is provided with four mounting holes 12, each being set at a similar position relative to a respective corner of the rear wall 11. One of these mounting holes 12 can be seen in Figure 1. In use, the holes 12 accommodate bolts or other fixtures which secure the housing to a wall or other substantially up-right surface. This may be done directly or through an intermediate bracket.

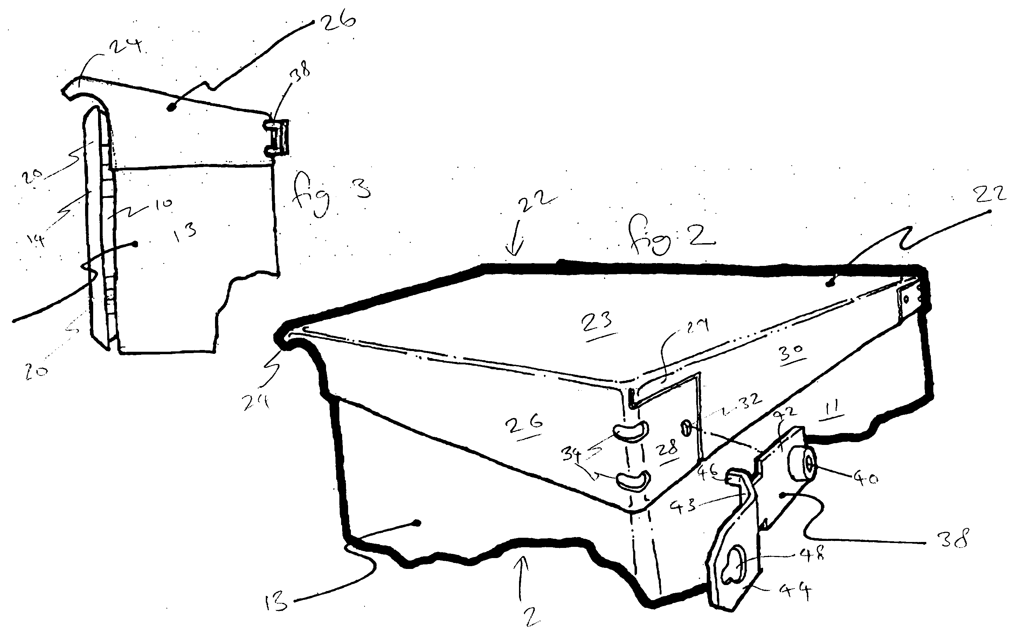

Figure 2 shows a perspective view of part of the enclosure 2 assembled together with a hood 22 and shows a bracket 38 of a suitable type for mounting the enclosure 2. Although Figure 2 shows the bracket in use in conjunction with the hood 22, this bracket can be used without the hood 22.

As will be seen from Figure 2, the bracket 38 comprises a support portion 42 for location adjacent the rear wall 11 of the enclosure 2 and a mounting portion 44 for fixation to an upright surface. The support portion 42 comprises an aperture and, as can be seen from Figure 2, this accommodates a bolt 40 for supporting the enclosure by locating through one of the mounting holes 12. The mounting portion 44 comprises a fixing aperture 48 for accommodating a bolt or screw or the like, for fixing the bracket 38 and, therefore, the enclosure 2, to the upright surface. The support portion 42 and mounting portion 44 are connected by an intermediate and integral spacer portion 43, which forms a ramped bridge between the two of them. The spacer portion 43 effectively enables the enclosure 2 to be mounted on the upright surface with a gap therebetween. Two stabiliser lugs 46 extend perpendicularly from the enclosure-facing side of the bracket and, when assembled, abut a side surface 13 of the housing 4, thereby enhancing the security of the mounting configuration. The spacer portion 43 could be omitted, if required. Indeed, many other bracket configurations are possible.

The door 6 of the enclosure is provided with an internal seal 15, which abuts the front-facing surface of the lip 10, when the door 6 is closed. As an additional measure the door 6 is provided with a peripheral skirt 14, which surrounds the lip and seal and provides protection therefor. The inner surface of the door 6 is also provided with an arrangement of struts 18 that follow the overall outline of the door, for strength. The door is secured to the housing of the enclosure by two hinges 20.

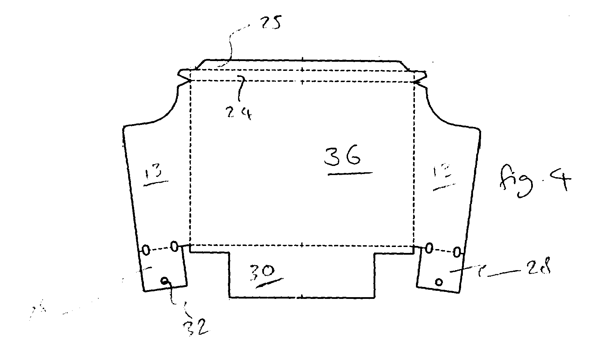

Referring to Figures 2 and 3, a first embodiment of the hood will now be described. As can be seen from the figures, the hood 22 fits over the top of the enclosure 2. It comprises an upper roof surface 23, which is of such a width that it projects further than the front of the enclosure 2, so as to define an overhang 24. The hood 22 also comprises two depending sidewalls 26, two rear returns 28 and a rear depending wall 30. As can be seen most clearly from Figure 2, the returns 28 each take the form of a rearward extension of the sidewalls 26, these having been bent through 90° so as to extend parallel to the back plane of the enclosure 2 when the hood is fitted. The rear depending wall 30 is essentially rearward extension of the roof surface 23 of the hood which has been bent through a little under 90° to render it parallel to the rear surface of the enclosure 2 when the hood is fitted.

Each return 28 includes a fixing aperture 32 which is situated so as to correspond with the location of one of the mounting holes 12 provided in the rear wall 11 of the enclosure housing 4. It will be noted that each edge situated on the boundary between a respective sidewall 26 and a return 28 includes two lug apertures 34 that are spaced apart along the length of the edge. The location of each of these lug apertures 34 corresponds with the position of a stabiliser lug 46, when the bracket 38 is fitted to the assembly. This enables the same bracket 38 to be used with the enclosure 2 regardless of whether or not the hood 22 is fitted.

It will be seen from Figure 2 that the returns 28 do not extend to the full height of the rear wall of the hood that they define in conjunction with the depending wall 30. There is, instead, a small lateral extension 29 that extends sidewardly from each side edge of the depending wall 30, so as to laterally overlap with each of the returns 28 in a region immediately above it.

In use, the hood 22 is merely fitted over the top of the enclosure 2 and the combination is mounted to an upright surface using the existing brackets 38 or directly (i.e. without any brackets). In either case, the method of attaching the enclosure 2 to the upright surface does not need to be modified: the existing brackets 38 can be used, or a bolt or the like can be driven straight through holes 12 in the rear wall of the enclosure (via the fixing apertures 32 in the hood 22) into the upright surface. It is not necessary to drill any fixing apertures into the roof of the enclosure, as is the case with the prior art. The hood 22 can be fitted with the enclosure 2 when the enclosure 2 is installed, or can be added to a pre-mounted enclosure 2 as a retrofit.

Once installed, the hood 22 provides protection for the enclosure 2 and the overhang 24 protects the seal 15 against permanent damp and UV radiation.

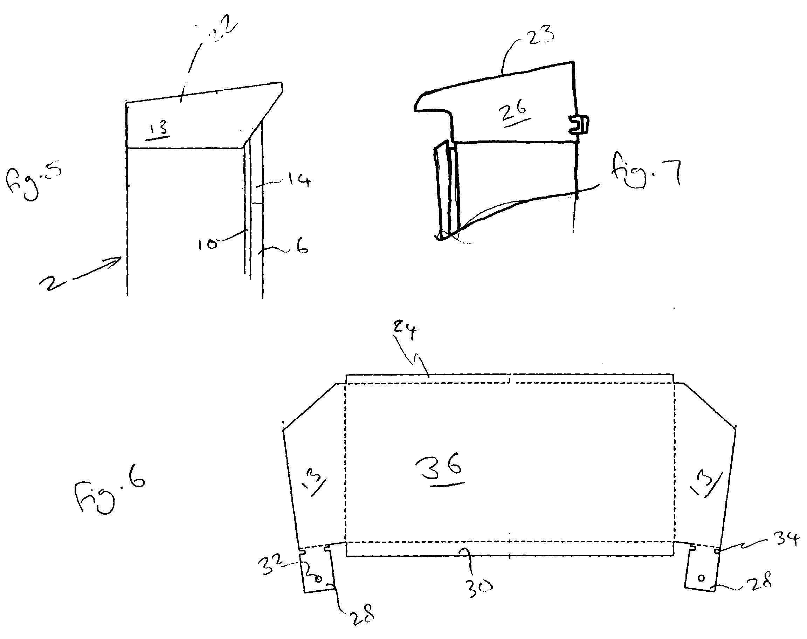

The hood 22 can be manufactured from a single sheet of metal, such as stainless steel or aluminium for example. A blank 36 for forming the hood 22 in this way is shown in Figure 4. In this figure, the fold lines are shown as broken lines.

The overall construction of the hood 22 means that it can be easily formed from the blank 36 shown in Figure 4 by a series of folding operations, and the hood 22, once formed, does not require any welding whatsoever. In this regard, it will be noted that the use of the returns 28 provides a particularly strong structure in the absence of a weld. The lateral extensions 29 ensure that any water falling onto the roof does not easily enter beneath the upper roof surface 23.

It will also be noted that the parts of the blank 36 that define the overhang 24 include a fold-back portion 25 which is folded back under the overhang 24 for strength and to provide a smooth edge. This feature could be omitted, if desired.

Figures 5 and 6 show an alternative embodiment of a hood 22. In this case, the depending wall 30 of the previous embodiment has been omitted. Furthermore, the lug apertures 34 have a different configuration: rather than providing space for the stabiliser lugs 46 to abut the enclosure housing 4 and remain flush with the sidewalls 26, as in the previous embodiment in this case the returns 28 define slots, so that the stabiliser lugs 46 can enter between the sidewalls 26 of the roof structure and the side surfaces 13 of the enclosure housing 4. Naturally, in this case, the length of the hood 22 is slightly longer than the length of the housing 4, so as to accommodate the lugs.

Figure 7 shows a hood similar to that shown in Figure 2, but instead having a forwardly declivitous upper roof surface 23. To form this hood, it will be noted that the sidewalls 26 have a different configuration in that they are deeper towards the rear of the hood than they are towards the front. Furthermore, it will be necessary to bend the depending wall portion 30 through greater than 90°, in order to form a rear wall that suitably aligns with the rear surface of the enclosure.

It is also possible to manufacture a forwardly declivitous hood similar to that shown in Figures 5 and 6 or using any other manufacturing technique or material.

Although the above three embodiments of the hood are both formed from flat metal blanks, alternative embodiments can be made from any suitable material; examples including vacuum-formed plastics (e.g. polycarbonate, ABS etc) and GRP.

Many further modifications and variations will suggest themselves to those versed in the art upon making reference to the foregoing description, which is given by way of example only and which is not intended to limit the scope of the invention, that being determined by the appended claims.

## Claims

1. A hood for an enclosure comprising a housing, the said hood comprising a roof portion for location over the housing and a fixing portion provided with fixing means for fixing the hood to the housing; the said fixing means being located in such a position that, when the said hood and enclosure are assembled together for use, the position of the said fixing means substantially corresponds with the position of means which are provided on the enclosure for supporting the position of the enclosure for use.

2. A hood according to Claim 1, wherein the said fixing portion is a rear wall of the hood, adapted to be located behind the enclosure during use.

3. A hood according to Claim 2, wherein the said fixing means comprises one or more fixing apertures, the or each said fixing aperture being situated in such a position as to correspond with a respective aperture in the said enclosure.

4. A hood according to Claim 3, comprising two fixing apertures.

5. A hood according to any preceding claim, formed from a plastics material.

6. A hood according to any preceding claim, formed from sheet material.

7. A hood according to Claim 6, wherein the sheet material is steel.

8. A hood according to Claim 7, wherein the steel is stainless steel.

9. A hood according to Claim 6, 7 or 8, wherein the material is not welded.

10. A hood according to any of Claims 6 to 9, wherein the hood comprises a rear portion which depends from a rear edge of the roof portion.

11. A hood according to any of Claims 6 to 10, comprising one or more sidewalls depending from the said roof portion.

12. A hood according to Claim 11 when dependent on Claim 2, wherein the or each said sidewall comprises an extension thereof, which extends from a rearward region thereof and is bent through substantially 90° to lie substantially in the plane of the rear wall and define part thereof.

13. A hood according to Claim 12, wherein the or each said extension portion accommodates a respective said fixing portion.

14. A hood according to Claim 10, or any claim dependent thereon, wherein a portion of the said rear depending portion that is situated in a region adjacent the roof portion extends substantially entirely from one side edge region of the said rear wall to another.

15. A hood according to Claim 14 when dependent on Claim 12, wherein the said rear depending portion overlaps, in the vertical direction when in use, the or each said extension portion in a respective one of the said side regions.

16. A hood according to Claim 12 or any claim dependent thereon, comprising one or more support apertures situated on the or each bend between the or each sidewall and its respective extension portion.

17. A hood substantially as hereinbefore described with reference to Figures 2 to 4; or Figures 5 and 6 of the accompanying drawings.

18. A hood in combination with an enclosure, the said enclosure comprising a substantially box-like housing; the said hood comprising a roof portion for location over the housing and a fixing portion provided with fixing means for fixing the hood to the housing; the said fixing means being located in such a position that, when the said hood and enclosure we assembled together for use, the position of the said fixing means substantially corresponds with the position of means which are provided on the enclosure for supporting the position of the enclosure for use.

19. A combination according to Claim 18 comprising a hood according to any of Claims 2 to 17.

20. A combination of a hood and an enclosure substantially as hereinbefore described with reference to Figures 1 to 4; or Figures 1, 5 and 6 of the accompanying drawings.
